# EUROPEAN PATENT APPLICATION

(11) **EP 0 811 874 A1**
(43) Date of publication of application: **10.12.1997**
(21) Application number: 96201541.8
(22) Date of filing: 04.06.1996
(51) Int. Cl.: G03B 11/04, H04N 5/225

(54) **Camera with easy adjusting focus**

(71) Applicant: Fifty Cycle Video Laser Device Co. Ltd., Shinjung City, Taipei Hsein (TW)
(72) Inventor: Wen, Tien-chi, Shinjung City, Taipei Hsien (TW)
(74) Representative: Ferguson, Alexander

(57) **Abstract**

A camera having a housing, a lens member, a front cover and a cap. The front cover is provided with U-shaped extensions for secure engagement with the housing by screws. The front cover is further configured to have a plurality of cutouts, a recess and ridges. The cap is configured to have a plurality of L-shaped lugs and a tongue. The cap is easily secured to the front cover by inserting the L-shaped lugs and the tongue respectively into the cutouts and the recess, and eventually making engagement with the ridges, thus the lens member is retained within the cap. The lens member is also easily accessible by a user if a force is applied to turn the cap counterclockwise to disengage the engagement of the L-shaped lugs with the ridges.

## Description

### FIELD OF THE INVENTION

The present invention generally relates to a camera, and more particularly to a camera with easy access for adjusting focus.

### BACKGROUND OF THE INVENTION

This invention has a particular application to a camera with an easily removable front cover, whereby a user may easily adjust the focus of the camera.

Cameras have been widely used in all kinds of business, such as in a bank as a monitoring means, or in an international teleconference as communication means where members may communicate with one another particularly when the members of the conference individually still stay in his/her own country. Therefore, the application field and the importance of a camera are getting clearer and more attached to the everyday life of people.

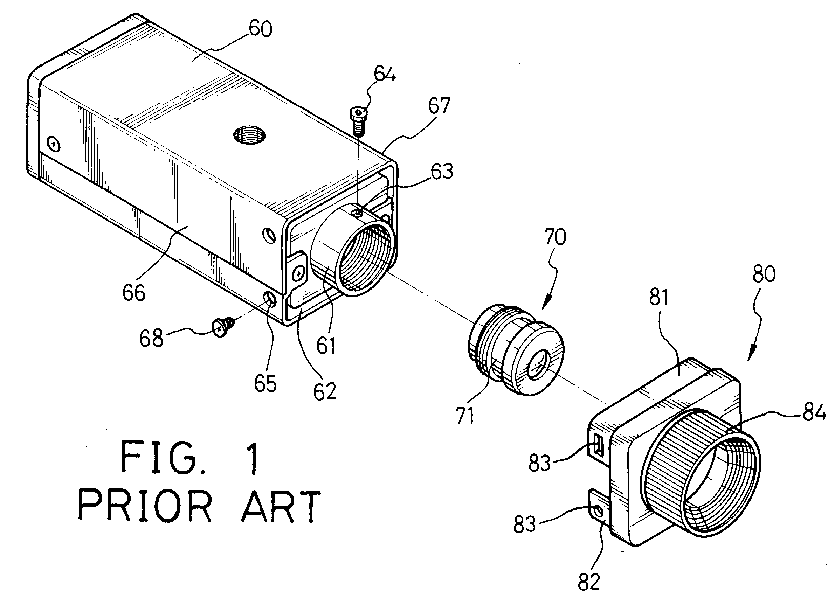

Referring to Fig. 1, a prior camera usually comprises a housing 60, a lens member 70 and a front cover 80. The housing 60 is provided with a cylindrical projection 61 on a first face 62, on which a through hole 63 is defined for positioning the lens member 70 having a reductive waist 71 such that when the lens member 70 is inserted into the cylindrical projection 61, a screw 64 extends through the hole 63 to abut against the waist 71. The housing 60 is further configured to have first side holes 65 on both a second face 66 and a third face 67 which are perpendicular to the first face 62. The front cover 80 having U shaped extensions 81, 82 extended axially and configured to have second side holes 83 corresponding to the first side holes 65 of the housing 60 is provided with an annular protrusion 84, such that the front cover 80 is firmly secured to the housing 60 by screws 68 extending through the second side holes 83 aligned with the first side holes 65 with screws 68 after the lens member 70 is securely received within the projection 61.

Such a design suffers from disadvantages, such as, when adjusting a focus of the lens member 70, it is necessary to first release all the screws 68 to loosen the front cover 80, and then adjusting focus of the lens member 70 is only possible after slackening of the screw 64 is accomplished.

The procedure of adjusting focus of a prior camera is not only inconvenient but also time wasting.

Therefore, the present invention provides an improved camera with easy adjusting focus.

### SUMMARY OF THE INVENTION

The main objective of the invention is to provide a camera with an easy adjustment of focus. The camera is provided with a housing, a cover means, and a lens member. The lens member is firmly screwed within a cylindrical projection of the housing with a coil spring installed on a reductive waist of the lense member, and the cover means comprises a front cover and a cap. The front cover is configured to have U-shaped extensions extended axially and a central aperture, a plurality of cutouts and a recess in communicating with the aperture and at least one ridge. The cap, therefore, is configured to have a plurality of L-shaped lugs and at least one tongue. With the tongue inserted into the recess and the L-shaped lugs inserted into the cutouts, the cap is easily secured onto or off the front cover by turning the cap clockwise or counterclockwise.

Other objects, advantages and novel features of the invention will become more apparent from the following detailed description when taken together with the accompanying drawings.

### BRIEF DESCRIPTION OF THE DRAWINGS

The present invention will now be better understood with the reference of the accompanying drawings wherein;
Fig. 1 is an exploded view of a prior camera;
Fig. 2 is an exploded view of a camera constructed in accordance with the present invention;
Fig. 3 is a partial perspective view of the invention showing a cap is disassembled from a housing;
Fig. 4 is a rear view of the front cover and the cap;
Fig. 5 is also a schematic rear view of the front cover and the cap showing the relationship between the front cover and the cap after the cap is being moved to a certain angle;
Fig. 6 is a perspective view of the present invention.

### DETAILED DESCRIPTION OF THE PREFERRED EMBODIMENT

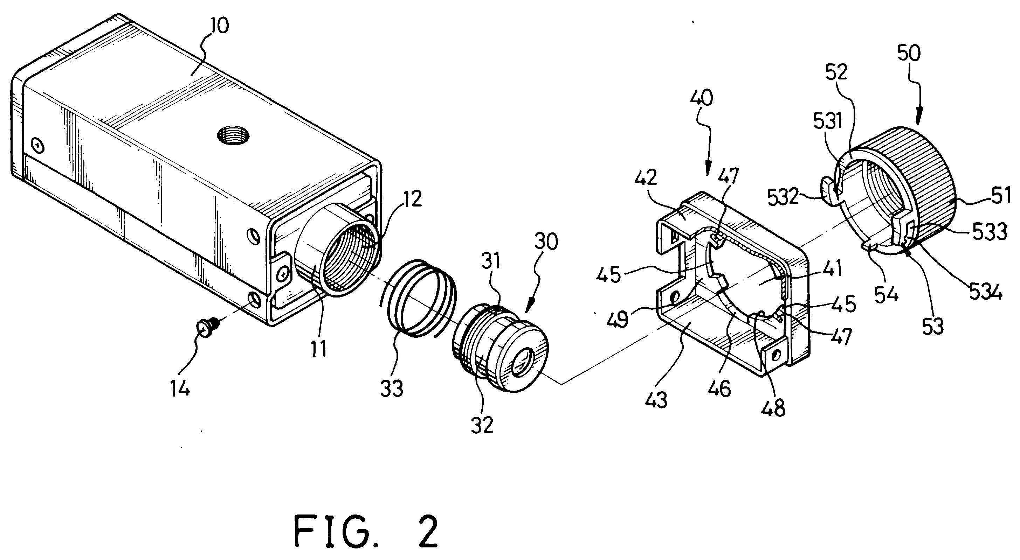

Referring to the drawings and particularly Fig 2, a camera constructed in accordance with the present invention is shown. The camera comprises a housing 10, a cover means 60, and a lens member 30. The lens member 30 is firmly screwed within a cylindrical projection 11 of the housing 10 with a coil spring 33 installed on a reductive waist 32. The cover means 60 comprises a front cover 40 and a cap 50. The front cover 40 includes a front plate 48, a peripheral wall 49 extending perpendicularly therefrom and two opposed substantially U-shaped extensions 42, 43 projecting from the peripheral wall 49. The front plate 48 includes a central aperture 41 defined by a periphery. The periphery includes two opposed cutouts 45 and a recess 46 between the cutouts 45, each communicating with the central aperture 41. Two opposed ridges 47 are formed on a rear face of the front plate.

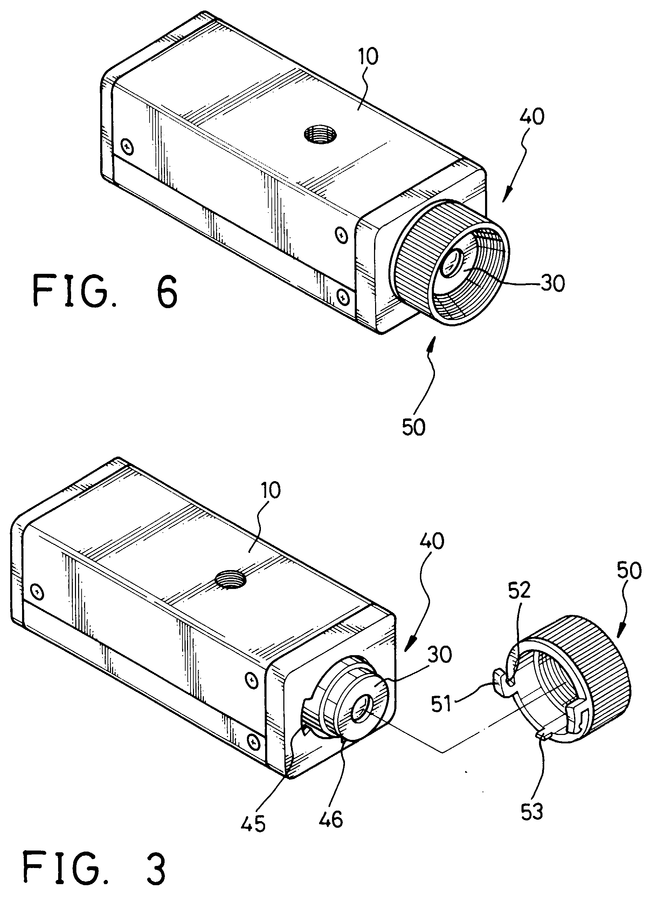

The cap 50 has a front face 51 and a rear face 52. Two L-shaped lugs 53 extend from the rear face 52 of the cap 50 and are configured to be received in the respective cutout 45. The cap 50 has an outer diameter corresponding to a diameter across the cutouts 45. The L-shaped lugs 53 each comprise a first portion 531 extending perpendicularly from the rear face 52 of the cap 50, and a second portion 532 perpendicular to the first portion 531 and pointing in a clockwise direction when viewed from the rear as seen in Fig. 3. Each second portion 532 has an inner face (not labeled) opposite to the rear face 52 of the cap 50 thus defining a gap 533 therebetween. The gap 533 is slightly larger than a thickness of the front plate 48. A notch 534 is defined in each inner face and configured to receive each corresponding ridge 47 such that the cap 50 is engagingly received in the front cover 48. The cap 50 further comprises a tongue 54 extending parallel to the first portions 531 of the L-shaped lugs 53 for positioning the cap 50 when the cap 50 is inserted into the recess 46 and also to make sure of that the cap 50 is inserted into the front cover 40 in a desired position.

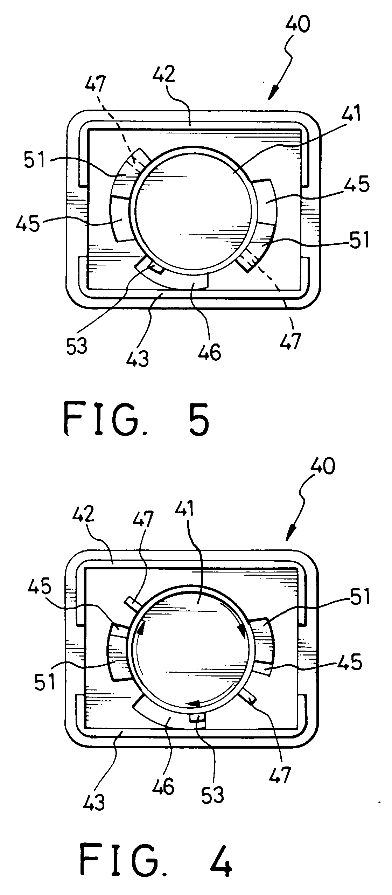

Referring to Figs. 2 and 3, it is noted that the lens member 30 is first securely inserted into the cylindrical projection 11 of the housing 10 with the coil spring 33 installed on the reductive waist 32, then the front cover 40 is screwed to the housing 10 with screws 14. The method of securing the front cover 40 to the housing 10 is well known to those who are skilled in the art, therefore, description of the method used in securing the front cover 40 to the housing 10 is unnecessary. After the lens member 30 is inserted into the cylindrical projection 11 of the housing 10, the coil spring 33 which is installed on the reductive waist 32 of the lens member 30 is expanded radially and thus engages with a threaded internal portion 12 of the projection 11, the lens member 30 is compressed between the reductive waist 32 and the threaded internal portion 12 and is kept in a rigid position. As can be seen from the preferred embodiment of the invention, the number of the L-shaped lugs 53 is two and each is constructed toward a clockwise direction, which is to engage the ridge 47 with the notch 534 of the L-shaped lugs 53 after the tongue 54 and the L-shaped lugs 53 are individually inserted into the recess 46 and the respective cutout 45 of the front cover 40 and the cap 50 is turned clockwise, as shown in Figs. 4 and 5.

The camera constructed in accordance with the present invention after being assembled is shown in Fig. 6, and if a focus adjustment is necessary, it is only needed to turn the cap 50 counterclockwise to disengage the engagement of the notch 534 of the L-shaped lug 53 with the ridge 47 of the front cover 40, then the lens member 30 is accessible.

From the foregoing, it is seen that the objects hereinbefore set forth may readily and efficiently be attained, and since certain changes may be made in the above construction and different embodiments of the invention without departing from the scope thereof, it is intended that all matter contained in the above description or shown in the accompanying drawings shall be interpreted as illustrative and not in a limiting sense.

## Claims

1. A camera comprising:
a housing having a cylindrical projection with threaded internal portion;
a lens member threadingly received within said cylindrical projection of said housing, having a narrowed waist with a coil spring installed thereon; and
a cover means securely retained to said housing and comprising:
a front plate having an aperture, at least one cutout, a recess, each of said at least one cutout and said recess communicating with said aperture of said front plate, at least one ridge and a peripheral wall, and
a cap having a front face and a rear face which is provided with at least one retaining means extended therefrom and a guiding means both respectively and slidingly received within said at least one cutout and said recess.

2. The camera as claimed in claim 1, wherein said coil spring is confined between said reductive waist of said lens member and said threaded internal portion of said cylindrical projection of said housing.

3. The camera as claimed in claim 1, wherein said at least one retaining means is a lug with a first portion extending perpendicularly from said rear face of said cap and a second portion perpendicular to said first portion.

4. The camera as claimed in claims 1, wherein each said second face of said lug has an inner face opposite to said rear face of said cap and defines a gap therebetween.

5. The camera as claimed in claim 4, wherein a notch is defined within said inner face to receive a corresponding ridge.

6. The camera as claimed in claim 4, wherein a width of said gap is slightly larger than a thickness of said front plate.

7. The camera as claimed in claims 1, wherein said guiding means is a tongue which extends parallel to said first portion of said L-shaped lug.
